# EUROPEAN PATENT SPECIFICATION

(11) **EP 3 843 463 B1**
(45) Date of publication and mention of the grant of the patent: **17.12.2025**
(21) Application number: 19852375.5
(22) Date of filing: 24.07.2019
(51) Int. Cl.: H04W 48/16, H04W 24/02, H04W 48/08, H04W 84/04

(54) **WIRELESS COMMUNICATION DEVICE AND WIRELESS COMMUNICATION METHOD**
DRAHTLOSKOMMUNIKATIONSVORRICHTUNG UND DRAHTLOSKOMMUNIKATIONSVERFAHREN
DISPOSITIF DE COMMUNICATION SANS FIL ET PROCÉDÉ DE COMMUNICATION SANS FIL

(30) Priority: 23.08.2018 JP 2018169197
(43) Date of publication of application: 30.06.2021
(73) Proprietor: NTT DoCoMo, Inc., Tokyo 100-6150 (JP)
(72) Inventor: HARADA, Hiroki, Tokyo 100-6150 (JP)
(74) Representative: Hoffmann Eitle
(86) International application number: PCT/JP2019/029002
(87) International publication number: WO 2020/039824

(56) References cited:
- ZTE: "Discussion on IAB node initial access process", vol. RAN WG1, no. Busan, Korea; 20180521 - 20180525, 20 May 2018 (2018-05-20), XP051441244, Retrieved from the Internet <URL:http://www.3gpp.org/ftp/Meetings%5F3GPP%5FSYNC/RAN1/Docs/> [retrieved on 20180520]
- NOKIA ET AL: "Enhancements on RACH for IAB", vol. RAN WG1, 10 August 2018 (2018-08-10), pages 1 - 4, XP051515960, Retrieved from the Internet <URL:http://www.3gpp.org/ftp/tsg%5Fran/WG1%5FRL1/TSGR1%5F94/Docs/R1%2D1808583%2Ezip> [retrieved on 20181211]
- ZTE: "Overview of physical layer enhancements for IAB", vol. RAN WG1, no. Busan, Korean; 20180521 - 20180525, 20 May 2018 (2018-05-20), XP051441242, Retrieved from the Internet <URL:http://www.3gpp.org/ftp/Meetings%5F3GPP%5FSYNC/RAN1/Docs/> [retrieved on 20180520]
- "3rd Generation Partnership Project; Technical Specification Group Radio Access Network; Study on Integrated Access and Backhaul; (Release 15)", 3GPP STANDARD; TECHNICAL REPORT; 3GPP TR 38.874, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V0.4.0, 9 August 2018 (2018-08-09), pages 1 - 55, XP051475113
- VIVO: "Selection of Parent for IAB-Node", 3GPP TSG RAN WG2 #103 R2-1811779, 10 August 2018 (2018-08-10), XP051521418
- LG ELECTRONICS: "Discussions on NR IAB support", 3GPP TSG RAN WG1 #94 R1-1808511, 11 August 2018 (2018-08-11), XP051515889
- "Discussion on enhancements to support NR backhaul links", 3GPP TSG RAN WG1 #94 RI-1809155, 11 August 2018 (2018-08-11), XP051516525
- AT & T: "Enhancements to support NR backhaul links", 3GPP TSG RAN WG1 #94 R1-1809072, 11 August 2018 (2018-08-11), XP051516441
- "Discussion on enhancements to support NR backhaul links", 3GPP TSG RAN WG1 #94B R1-1811359, 29 September 2018 (2018-09-29), XP051518762

## Description

### Technical Field

The present disclosure relates to a radio communication apparatus and a radio communication method in next-generation mobile communication systems.

### Background Art

In the universal mobile telecommunications system (UMTS) network, the specifications of long-term evolution (LTE) have been drafted for the purpose of further increasing high speed data rates, providing lower delays, and the like (see Non-Patent Literature 1). In addition, the specifications of LTE-Advanced (LTE-A, LTE Rel. 10-14) have been drafted for the purpose of further increasing the capacity, sophistication, and the like of LTE (LTE Rel. 8, 9).

Successor systems of LTE (for example, future radio access (FRA), 5th generation mobile communication system (5G), 5G+ (plus), New Radio (NR), new radio access (NX), future generation radio access (FX), LTE Rel. 15 or later versions, and so on) are also under study.

### Citation List

### Non Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010
Non-Patent Literature 2: ZTE: "Discussion on IAB node initial access process", 3GPP DRAFT; R1-1806026; vol. RAN WG1, no. Busan, Korea; 20180521 - 20180525 20 May 2018
Non-Patent Literature 3: NOKIA ET AL: "Enhancements on RACH for IAB", 3GPP DRAFT; R1-1808583; vol. RAN WG1 10 August 2018; pages 1-4
Non-Patent Literature 4: ZTE: "Overview of physical layer enhancements for IAB", 3GPP DRAFT; R1-1806024 vol. RAN WG1, no. Busan, Korean; 20180521 - 20180525; 20 May 2018

### Summary of Invention

### Technical Problem

In future radio communication systems (for example, NR), the use of integrated access backhaul (IAB) technology that uses NR communication as a backhaul between base stations (or between a base station and a relay station) is under study. In particular, it is expected that IAB using NR communication using millimeter waves can expand the coverage area at low cost.

In NR, methods for an IAB node to discover other IAB nodes are under study. It is studied to perform the IAB node discovery based on, for example, synchronization signal/broadcast channel (synchronization signal/physical broadcast channel (SS/PBCH)) block or a channel state information reference signal (CSI-RS). Here, the SS/PBCH block may be referred to as a synchronous signal block (SSB). When selecting an IAB node from a plurality of detected IAB nodes, hop level of the IAB node, beam quality or link measurement results may be taken into account (see Non-Patent Literature 2 to 4).

However, in the studies of NR so far, the IAB node cannot grasp whether or not another IAB node that has transmitted the detected SSB or CSI-RS can become a candidate for its own parent node. Consequently, the IAB node may uselessly measure a discovery signal or attempt to connect. Thus, appropriate operation of the IAB node will not be performed, and there is a risk that an increase in power consumption of the IAB node or a drop of communication throughput or the like becomes a problem.

Accordingly, one of the objects of the present disclosure is to provide a radio communication apparatus and a radio communication method capable of appropriately grasping an IAB donor.

### Solution to Problem

The subject-matter of the independent claims solves the above technical problem/s. The dependent claims describe further preferred embodiments.

### Advantageous Effects of Invention

According to one aspect of the present disclosure, an IAB donor can be properly grasped.

### Brief Description of Drawings

Fig. 1 is a diagram illustrating an example of a configuration of an IAB.
Fig. 2 is a diagram illustrating an example of a case where a node with a parent node function and a node without a parent node function coexist.
Fig. 3 is a diagram illustrating an example of a schematic configuration of a radio communication system according to one embodiment.
Fig. 4 is a diagram illustrating an example of an overall configuration of a base station according to one embodiment.
Fig. 5 is a diagram illustrating an example of a functional configuration of the base station according to one embodiment.
Fig. 6 is a diagram illustrating an example of an overall configuration of a user terminal according to one embodiment.
Fig. 7 is a diagram illustrating an example of a functional configuration of the user terminal according to one embodiment.
Fig. 8 is a diagram illustrating an example of a hardware configuration of the base station and the user terminal according to one embodiment.

### Description of Embodiments

### (IAB node)

The use of integrated access backhaul (IAB) technology, which uses NR communication as a backhaul between base stations (or between a base station and a relay station), is under study. In particular, it is expected that IAB using NR communication using millimeter waves can expand the coverage area at low cost.

An IAB node may have at least one function such as Distribution Unit (DU), Central Unit (CU), Mobile Termination (MT), or the like. Therefore, the IAB node may function as a base station or as a user terminal (User Equipment (UE)).

Note that the IAB may be called a radio backhaul or the like. A link between IAB nodes may be referred to as a backhaul link. A link between the IAB node and the UE may be referred to as an access link. The IAB node may use communication using NR for the backhaul link. The IAB node may use communication using NR for the access link, or may use communication based on another radio access technology (RAT).

With the introduction of the IAB, base stations can use the same frequency for backhaul and UE access simultaneously or by switching, and thus it is expected to improve frequency utilization efficiency, for example. For example, a backhaul link and an access link may be multiplexed using at least one of time division multiplexing (TDM), frequency division multiplexing (FDM), or space division multiplexing (SDM).

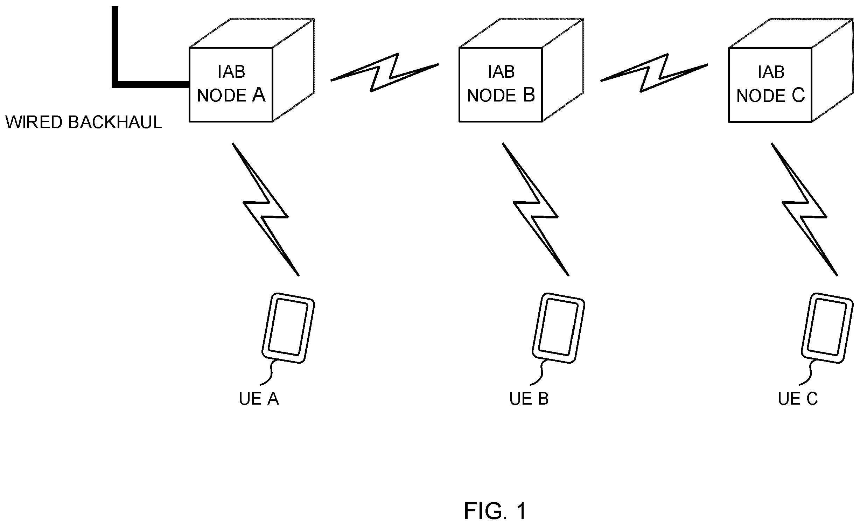

Fig. 1 is a diagram illustrating an example of a configuration of the IAB. In this example, three IAB nodes A to C are illustrated. The IAB node A is connected to a core network via a wired backhaul (for example, an optical fiber network).

An upper IAB node may be referred to as an IAB donor, a parent IAB node, a parent node, an upper node, and the like. A lower IAB node may be referred to as a child IAB node, a child node, a lower node, and the like. Here, the "upper" may mean that it is closer to at least one of a base station (for example, gNB), a wired backhaul, a core network, or the like (the number of hops is small).

For example, in the example of Fig. 1, the IAB node A is the parent of the IAB node B and the IAB node B is the parent of the IAB node C. Thus, the IAB may include a plurality of backhaul hops. In addition, the IAB nodes A to C can communicate with the UEs A to C, respectively, via access links.

When a certain IAB node has the function of an upper IAB node (for example, supporting operation as a base station), the IAB node can treat the lower IAB node as a UE. The upper IAB node may perform scheduling of the lower IAB node, or may control transmission or reception of the lower IAB node.

When a certain IAB node does not have the function of an upper IAB node (for example, supporting operation as a base station), the IAB node may function as a lower IAB node and may perform, for example, an operation of a UE.

### (Discovery of IAB node)

In NR, a method for an IAB node to discover another IAB node (inter-IAB node discovery) is under study. The inter-IAB node discovery may be referred to as IAB node discovery, IAB node detection, IAB node discovery after initial access, and the like.

It is studied to perform the IAB node discovery based on, for example, at least one of synchronization signal/broadcast channel (synchronization signal/physical broadcast channel (SS/PBCH)) block, a channel state information reference signal (CSI-RS), or another reference signal. Here, the SS/PBCH block may be referred to as a synchronous signal block (SSB).

In SSB-based IAB node discovery, the same SSB set as an SSB set used for access UE (which may be referred to as UE for access link, UE that is not an IAB node, or simply UE, or the like) may be used, or different SSB sets may be used.

For example, in the SSB-based IAB node discovery, an SSB set that is orthogonal to the SSB set used for access UE (for example, at least one of FDM or TDM applies) may be used.

In the SSB-based IAB node discovery, the same SSB set as the SSB set used for access UE (which may be referred to as UE of access link, UE that is not an IAB node, or simply UE, or the like) may be used.

For the SSB-based IAB node discovery, IAB nodes may support transmitting and measuring SSB using half-duplex. The IAB node may apply a predetermined muting pattern to the SSB to make some SSB non-transmitted.

CSI-RS-based IAB node discovery may be expected to be used in synchronous network operations (for example, when IAB nodes are in synchronization).

Regarding SSB or CSI-RS measurement configurations (for example, a timing configuration for measurement using SSB (SSB-based measurement timing configuration (SMTC)), coordination between nodes (base stations) (for example, restriction of simultaneous scheduling with SSB transmission/reception in synchronization/asynchronous, and the like)), it is considered to extend the studies of NR so far.

An IAB node discovery signal (SSB, CSI-RS, or the like) may be transmitted by an IAB node having the function of an upper IAB node, or by any IAB node. Further, the IAB node discovery signal may be received by an IAB node that does not have the function of an upper IAB node, or may be received by any IAB node. Note that in the present disclosure, reception, detection, measurement, and the like may be replaced with each other.

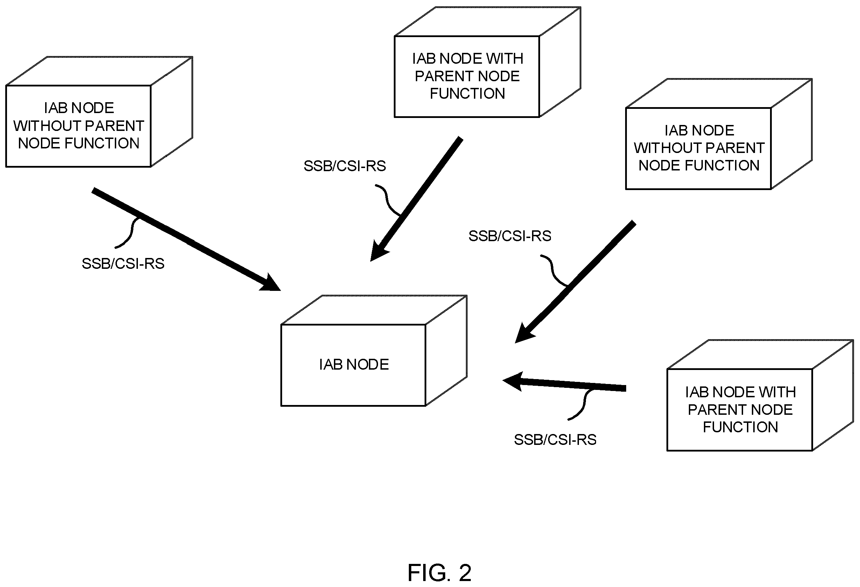

However, when a certain IAB node detects an IAB node (for example, an IAB donor) in the surroundings based solely on SSB or CSI-RS, a possibility that all IAB nodes in the surroundings (which may be base stations) do not have the function as an IAB donor is conceivable. Fig. 2 is a diagram illustrating an example of a case where a node with a parent node function and a node without a parent node function coexist.

In the studies of NR so far, the IAB node illustrated in Fig. 2 cannot grasp whether or not the IAB node (which may be a base station) that transmitted the detected SSB or CSI-RS can become a candidate for its own parent node.

Consequently, the IAB node may uselessly measure a discovery signal or attempt to connect to a node that is not an IAB donor. Thus, appropriate operation of the IAB node will not be performed, and there is a risk that an increase in power consumption of the IAB node or a drop of communication throughput or the like becomes a problem.

Accordingly, the present inventor has conceived a method for preferably identifying whether or not a certain IAB node is an IAB donor.

Hereinafter, embodiments according to the present disclosure will be described in detail with reference to the drawings. The radio communication method according to each of the embodiments may be applied independently, or may be applied in combination with others.

Note that in the present disclosure, SSB index and SSB resource indicator (SSBRI) may be replaced with each other. Further, the CSI-RS index, CSI-RS resource ID, and CSI-RS resource indicator (CRI) may be replaced with each other.

### (Radio Communication Method)

In one embodiment covered by the claims, the IAB node may determine whether or not another IAB node (source node) can become a parent node candidate (for example, whether or not it has the function of an IAB donor) based on a predetermined signal or channel received from the other IAB node. The predetermined signal or channel may be referred to as an IAB donor discovery signal (or channel), a parent IAB node discovery signal (or channel), or the like. In the present disclosure, the "IAB donor discovery signal" may be replaced with the "parent IAB node discovery signal or channel".

The IAB node may assume that at least one of the IAB node or the base station that has the function as a parent node (or base station) transmits the IAB donor discovery signal. The IAB node may determine that at least one of the IAB node or the base station corresponding to the received IAB donor discovery signal is a candidate for the parent node.

The IAB node may determine that an IAB node that does not transmit the IAB donor discovery signal (an IAB node that transmits the IAB donor discovery signal) is a candidate for the child node, and may assume that, for the candidate child node, predetermined processing (for example, connection processing, random access procedure, predetermined measurement) is not performed.

The IAB donor discovery signal may be an SSB or CSI-RS having different characteristics from the SSB and CSI-RS for access UE (or access link). Note that the SSB and CSI-RS for access UE may be replaced with SSB and CSI-RS specified by Release-15 NR (Rel-15 NR) of the 3rd Generation Partnership Project (3GPP).

The characteristics of the IAB donor discovery signal that are different from the SSB and CSI-RS for access UE may be, for example, at least one of the following:
(1) the method of generating a sequence is different,
(2) the resource mapping pattern is different.

Regarding (1) above, for example, the IAB node may assume that a sequence of the SSB as the IAB donor discovery signal is generated independently of a cell identifier (ID), unlike the SSB for access UE. In addition, the IAB node may assume that a sequence of the CSI-RS as the IAB donor discovery signal is generated based on a scrambling ID different from that of the CSI-RS for access UE.

Regarding (2) above, for example, the IAB node may assume that the time domain size, period, timing, frequency domain size, period, resource position, and the like of the SSB as the IAB donor discovery signal are different from those of the SSB for access UE.

The IAB node may be configured with (notified of) information regarding SSB and CSI-RS for IAB donor discovery (for example, information used to generate a sequence, resource information, and the like) using higher layer signaling, physical layer signaling, or a combination thereof from the base station or another IAB node, or may determine the information based on the specifications.

In the present disclosure, the higher layer signaling may be, for example, any of radio resource control (RRC) signaling, medium access control (MAC) signaling, broadcast information, and so on, or a combination of these.

For the MAC signaling, for example, a MAC control element (MAC CE), a MAC protocol data unit (PDU), or the like may be used. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI), uplink control information (UCI), or the like.

The IAB donor discovery signal may be a signal (for example, reference signal) or channel different from the SSB and CSI-RS that are IAB node discovery signals. For example, the IAB donor discovery signal may be another signal or channel that is multiplexed with the SSB and CSI-RS that are IAB node discovery signals by using at least one of TDM, FDM, or SDM.

For example, an IAB node having a function as a parent node may transmit the following sets of IAB node discovery signal and IAB donor discovery signal:
(A) the IAB node discovery signal being SSB, and the IAB donor discovery signal being CSI-RS multiplexed with the SSB and at least one of TDM, FDM, or SDM,
(B) the IAB node discovery signal being SSB or CSI-RS, and the IAB donor discovery signal being a reference signal multiplexed with the SSB using at least one of TDM, FDM, or SDM,
(C) the IAB node discovery signal being SSB or CSI-RS, and the IAB donor discovery signal being a specific physical channel multiplexed with the SSB using at least one of TDM, FDM, or SDM.

In the case of above (A), the IAB node may grasp whether the CSI-RS is the IAB donor discovery signal based on the presence or absence, sequence, sequence pattern, resource position, and the like of the CSI-RS. When the IAB node detects a certain SSB and assumes that the IAB node that has transmitted the SSB is the same as the IAB node that has transmitted the CSI-RS as an IAB node discovery signal, the IAB node may perform control to execute processing (for example, connection processing, random access procedure) for that IAB node.

In the case of above (B), the IAB node may grasp whether the reference signal is the IAB donor discovery signal based on the presence or absence, sequence, sequence pattern, resource position, and the like of the reference signal. When the IAB node detects a certain SSB or CSI-RS and assumes that the IAB node that has transmitted the SSB or CSI-RS is the same as the IAB node that has transmitted the reference signal as an IAB node discovery signal, the IAB node may perform control to execute processing (for example, connection processing, random access procedure) for that IAB node.

In the case of above (C), the IAB node may grasp whether the specific physical channel is the IAB donor discovery signal based on the presence or absence, sequence, sequence pattern, value, resource position, and the like of the specific physical channel. When the IAB node detects a certain SSB or CSI-RS and assumes that the IAB node that has transmitted the SSB or CSI-RS is the same as the IAB node that has transmitted the specific physical channel as an IAB node discovery signal, the IAB node may perform control to execute processing (for example, connection processing, random access procedure) for that IAB node. Note that the specific physical channel may be PDSCH, PUCCH or other channels.

The IAB donor discovery signal may be transmitted using a sequence or resource based on the IAB node discovery signal. The IAB node may assume that, for example, at least one of a sequence or resource position of the IAB donor discovery signal is determined based on an index (SSB index, CSI-RS index) of the IAB node discovery signal. Further, the IAB node may assume that, for example, at least one of the sequence or the resource position of the IAB donor discovery signal is determined based on the cell ID.

The IAB node may be configured with (notified of) information regarding the correspondence between the IAB node discovery signal and the IAB donor discovery signal from the base station or another IAB node using higher layer signaling, physical layer signaling, or a combination thereof, or may determine the information based on the specifications.

The correspondence information may include, for example, information regarding resource offset between the IAB node discovery signal and the IAB donor discovery signal, a sequence, and the like.

Note that the IAB donor discovery signal may include both a signal or channel different from SSB and CSI-RS and SSB or CSI-RS having characteristics different from SSB and CSI-RS for access UE.

Note that the access UE may detect the IAB donor discovery signal, and may transmit information regarding the IAB donor to the IAB node to which the UE is connected (serving cell is provided) (for example, information regarding which IAB node has the function as an IAB donor). Further, the IAB node may also receive information regarding the IAB donor from another IAB node.

According to the embodiment described above, even when a base station or IAB node having the function as an IAB donor and a node not having the function as an IAB donor coexist in the network, a node or donor to be a target upon detecting and measuring an IAB node or donor in the surroundings can be properly recognized, and unnecessary measurement operation and connection establishment operation can be avoided.

### (Radio communication system)

Now, a configuration of a radio communication system according to one embodiment of the present disclosure will be described below. In this radio communication system, communication is performed using one or a combination of the radio communication methods according to the embodiments of the present disclosure.

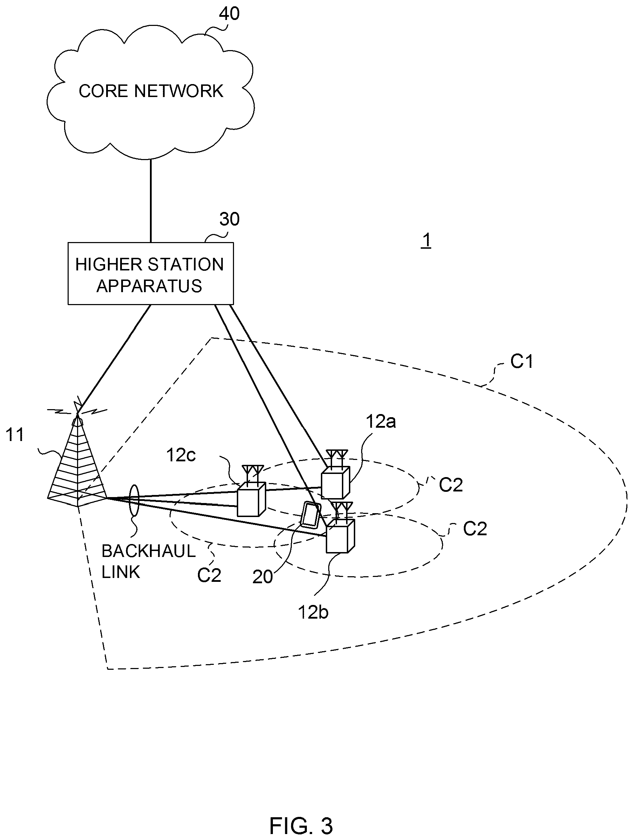

Fig. 3 is a diagram illustrating an example of a schematic configuration of a radio communication system according to one embodiment. A radio communication system 1 can employ at least one of carrier aggregation (CA) and/or dual connectivity (DC) to group a plurality of fundamental frequency blocks (component carriers) into one, where the system bandwidth (for example, 20 MHz) constitutes one unit.

Note that the radio communication system 1 may be referred to as LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), NR (New Radio), FRA (Future Radio Access), New-RAT (Radio Access Technology), and so on, or may be referred to as a system to implement these.

Further, the radio communication system 1 may support dual connectivity (multi-RAT dual connectivity (MR-DC)) between a plurality of RATs (Radio Access Technology). The MR-DC may include dual connectivity of LTE and NR (E-UTRA-NR Dual Connectivity (EN-DC)) in which a base station (eNB) of LTE (Evolved Universal Terrestrial Radio Access (E-UTRA)) becomes a master node (MN), and a base station (gNB) of NR becomes a secondary node (SN), dual connectivity of NR and LTE (NR-E-UTRA Dual Connectivity (NE-DC)) in which a base station (gNB) of NR becomes MN, and a base station (eNB) of the LTE (E-UTRA) becomes SN, and the like.

The radio communication system 1 includes a base station 11 that forms a macro cell C1 covering a relatively wide coverage, base stations 12 (12a to 12c) that are placed within the macro cell C1 and that form small cells C2, which are narrower than the macro cell C1. Further, a user terminal 20 is placed in the macro cell C1 and in each small cell C2. The arrangement, number and so on of cells and user terminal 20 are not limited to an aspect illustrated in the drawings.

The user terminal 20 can connect with both the base station 11 and the base stations 12. The user terminal 20 are assumed to use the macro cell C1 and the small cells C2 simultaneously using CA or DC. Further, the user terminal 20 may apply CA or DC using a plurality of cells (CCs).

Between the user terminal 20 and the base station 11, communication can be carried out using a carrier of a relatively low frequency band (for example, 2 GHz) and a narrow bandwidth (referred to as an "existing carrier", a "legacy carrier", and so on). Meanwhile, between the user terminal 20 and the base stations 12, a carrier of a relatively high frequency band (for example, 3.5 GHz, 5 GHz, and so on) and a wide bandwidth may be used, or the same carrier as that used in the base station 11 may be used. Note that the configuration of the frequency band for use in each base station is by no means limited to these.

Further, the user terminal 20 can perform communication in each cell using at least one of time division duplex (TDD) or frequency division duplex (FDD). Further, in each cell (carrier), a single numerology may be applied, or a plurality of different numerologies may be applied.

The numerology may be a communication parameter applied to at least one of transmission or reception of a certain signal or channel. The numerology may indicate, for example, at least one of subcarrier spacing, bandwidth, symbol length, cyclic prefix length, subframe length, TTI duration, the number of symbols per TTI, the radio frame configuration, particular filtering processing performed by the transceiver in frequency domains, particular windowing processing performed by a transceiver in time domains, and so on.

For example, for a certain physical channel, in the case where at least one of the subcarrier spacing of the constituent OFDM symbols and the number of OFDM symbols is different, it may be said that the numerology is different.

The base station 11 and the base station 12 (or between two base stations 12) may be connected by wire (for example, optical fiber, an X2 interface, and the like in compliance with the common public radio interface (CPRI)) or wirelessly. For example, when NR communication is used as a backhaul between base stations 11 and 12, the base station 11 corresponding to the upper station may be referred to as an IAB (Integrated Access Backhaul) donor, and the base station 12 corresponding to a relay station may be called an IAB node.

The base station 11 and the base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME), and so on, but is by no means limited to these. Also, each base station 12 may be connected with the higher station apparatus 30 via the base station 11.

Note that the base station 11 is a base station having a relatively wide coverage, and may be referred to as a "macro base station", an "aggregate node", an "eNB (eNodeB)", a "transmission/reception point", and so on. Also, the base stations 12 are base stations having local coverages, and may be referred to as "small base stations", "micro base stations", "pico base stations", "femto base stations", "HeNBs (Home eNodeBs)", "remote radio heads (RRHs)", "transmission/reception points", and so on. Hereinafter the base stations 11 and 12 will be collectively referred to as "base stations 10", unless specified otherwise.

The user terminals 20 are terminals to support various communication schemes such as LTE, LTE-A, and 5G, and may be either mobile communication terminals (mobile stations) or stationary communication terminals (fixed stations).

In the radio communication system 1, as a radio access method, orthogonal frequency division multiple access (OFDMA) is applied to the downlink, and at least one of single carrier-frequency division multiple access (SC-FDMA) or OFDMA is applied to the uplink.

OFDMA is a multi-carrier communication scheme to perform communication by dividing a frequency band into a plurality of narrow frequency bands (subcarriers) and mapping data to each subcarrier. SC-FDMA is a single-carrier communication method of reducing an interference between terminals by dividing, for each of terminals, a system bandwidth into bands composed of one or continuous resource blocks, and causing a plurality of terminals to use mutually different bands. Note that the uplink and downlink radio access schemes are not limited to the combinations of these, and other radio access schemes can be used as well.

In the radio communication system 1, a physical downlink shared channel (PDSCH), a physical broadcast channel (PBCH), a downlink control channel, and the like, which are shared by each user terminal 20, are used as the downlink channel. User data, upper layer control information, system information blocks (SIBs), and the like are transmitted in the PDSCH. Further, MIB (Master Information Block) is transmitted by PBCH.

The downlink control channels include a physical downlink control channel (PDCCH), an enhanced physical downlink control channel (EPDCCH), a physical control format indicator channel (PCFICH), a physical hybrid-ARQ indicator channel (PHICH), and so on. Downlink control information (DCI) including scheduling information of at least one of PDSCH or PUSCH, and the like are transmitted by the PDCCH.

Note that DCI that schedules reception of DL data may also be referred to as "DL assignment", and DCI that schedules transmission of UL data may also be referred to as "UL grant".

The use of PCFICH can cause the number of OFDM symbols used for the PDCCH to be transmitted. The PHICH may cause hybrid automatic repeat request (HARQ) delivery acknowledgement information (for example, such as retransmission control information, HARQ-ACK, and ACK/NACK) for the PUSCH to be transmitted. The EPDCCH is frequency-division-multiplexed with the PDSCH (downlink shared data channel) and used for transmitting DCI and the like, like the PDCCH.

In the radio communication system 1, an uplink shared channel (physical uplink shared channel (PUSCH)), which is used by each user terminal 20 on a shared basis, an uplink control channel (physical uplink control channel (PUCCH)), a random access channel (physical random access channel (PRACH)), and so on are used as uplink channels. User data, upper layer control information, and so on are communicated by the PUSCH. Also, in the PUCCH, downlink radio link quality information (channel quality indicator (CQI)), delivery acknowledgement information, scheduling requests (SRs), and so on are communicated. By means of the PRACH, random access preambles for establishing connections with cells are transmitted.

In the radio communication systems 1, cell-specific reference signal (CRSs), channel state information reference signal (CSI-RSs), demodulation reference signal (DMRSs), positioning reference signal (PRSs), and so on are transmitted as downlink reference signals. Also, in the radio communication system 1, measurement reference signals (SRSs (Sounding Reference Signals)), demodulation reference signals (DMRSs), and so on are communicated as uplink reference signals. Note that, DMRSs may be referred to as "user terminal-specific reference signals (UE-specific reference signals)". Also, the reference signals to be communicated are by no means limited to these.

### (Base station)

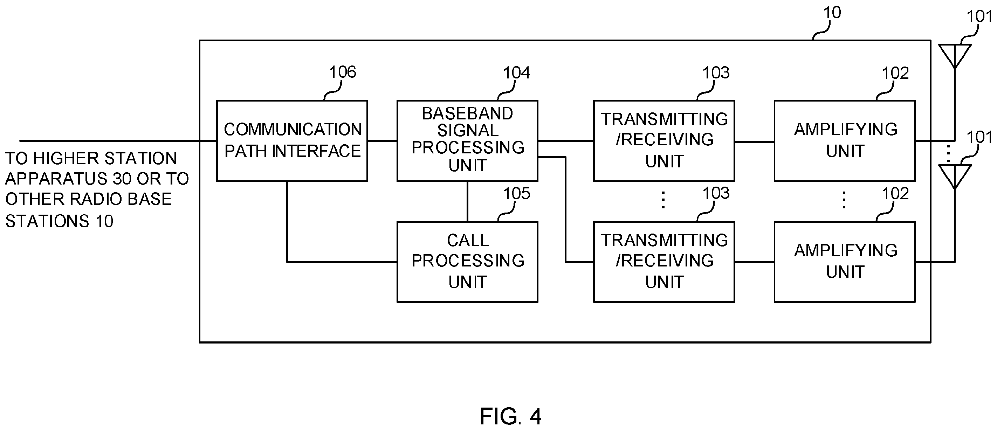

Fig. 4 is a diagram illustrating an example of an overall configuration of a base station according to one embodiment. A base station 10 has a plurality of transmitting/receiving antennas 101, amplifying units 102, transmitting/receiving units 103, a baseband signal processing unit 104, a call processing unit 105, and a communication path interface 106. Note that one or more transmitting/receiving antennas 101, amplifying units 102, and transmitting/receiving units 103 may be provided.

User data to be transmitted from the base station 10 to the user terminal 20 on the downlink is input from the higher station apparatus 30 to the baseband signal processing unit 104, via the communication path interface 106.

In the baseband signal processing unit 104, the user data is subjected to transmission processes, including a packet data convergence protocol (PDCP) layer process, division and coupling of user data, radio link control (RLC) layer transmission processes such as RLC retransmission control, medium access control (MAC) retransmission control (for example, an HARQ transmission process), scheduling, transport format selection, channel coding, an inverse fast Fourier transform (IFFT) process, and a precoding process, and so on and results of the processes will be forwarded to the transmitting/receiving unit 103. Furthermore, downlink control signals are also subjected to transmission processes such as channel coding and an inverse fast Fourier transform, and forwarded to the transmitting/receiving units 103.

Base band signals that are pre-coded and output from the baseband signal processing unit 104 on a per antenna basis are converted into a radio frequency band in the transmitting/receiving units 103, and then transmitted. The radio frequency signals having been subjected to frequency conversion in the transmitting/receiving units 103 are amplified in the amplifying units 102, and transmitted from the transmitting/receiving antennas 101. The transmitting/receiving unit 103 can be constituted by a transmitters/receiver, a transmitting/receiving circuit or transmitting/receiving apparatus that can be described based on general understanding of the technical field to which the present disclosure pertains. Note that a transmitting/receiving unit 103 may be structured as a transmitting/receiving unit in one entity, or may be constituted by a transmitting unit and a receiving unit.

Meanwhile, as for uplink signals, radio frequency signals that are received in the transmitting/receiving antennas 101 are each amplified in the amplifying units 102. The transmitting/receiving units 103 receive the uplink signals amplified in the amplifying units 102. The received signals are converted into the base band signal through frequency conversion in the transmitting/receiving units 103 and output to the baseband signal processing unit 104.

In the baseband signal processing unit 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing unit 105 performs call processing (such as configuration and releasing) of communication channels, manages the state of the base stations 10, and manages the radio resources.

The communication path interface 106 transmits and receives signals to and from the higher station apparatus 30 via a given interface. Also, the communication path interface 106 may transmit and receive signals (backhaul signaling) with other base stations 10 via an inter-base station interface (which is, for example, optical fiber, an X2 interface, or the like that is in compliance with the common public radio interface (CPRI)).

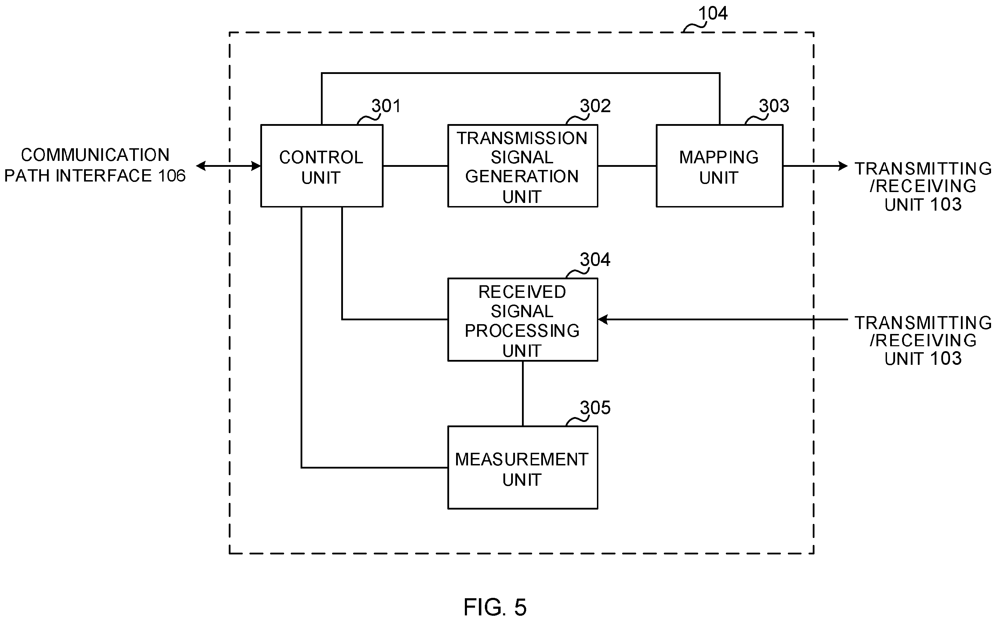

Fig. 5 is a diagram illustrating an example of a functional configuration of the base station according to one embodiment. Note that, although this example will primarily illustrate functional blocks that pertain to characteristic parts of the present embodiment, it may be assumed that the base station 10 has other functional blocks that are necessary for radio communication as well.

The baseband signal processing unit 104 at least has a control unit (scheduler) 301, a transmission signal generation unit 302, a mapping unit 303, a received signal processing unit 304, and a measurement unit 305. Note that these configurations have only to be included in the base station 10, and some or all of these configurations need not be included in the baseband signal processing unit 104.

The control unit (scheduler) 301 controls the whole of the base station 10. The control unit 301 can be constituted by a controller, a control circuit, or control apparatus that can be described based on general understanding of the technical field to which the present disclosure pertains.

For example, the control unit 301 controls generation of signals in the transmission signal generation unit 302, allocation of signals in the mapping unit 303, and so on. Furthermore, the control unit 301 controls the signal receiving process in the received signal processing unit 304, the measurements of signals in the measurement unit 305, and so on.

The control unit 301 controls the scheduling (for example, resource allocation) of system information, downlink data signals (for example, signals transmitted in the PDSCH), and downlink control signals (for example, signals that are transmitted in the PDCCH and/or the EPDCCH, such as delivery acknowledgement information). Scheduling (for example, resource allocation) of delivery confirmation information). Further, the control unit 301 controls generation of downlink control signals, downlink data signals and so on, based on the results of deciding whether or not retransmission control is necessary for uplink data signals, and so on.

The control unit 301 controls scheduling of synchronization signals (for example, PSS/SSS), downlink reference signals (for example, CRS, CSI-RS, DMRS), and so on.

The transmission signal generation unit 302 generates downlink signals (downlink control signals, downlink data signals, downlink reference signals, and so on) based on instructions from the control unit 301, and outputs these signals to the mapping unit 303. The transmission signal generation unit 302 can be constituted by a signal generator, a signal generation circuit, or a signal generation apparatus that can be described based on general understanding of the technical field to which the present disclosure pertains.

For example, the transmission signal generation unit 302 generates DL assignments, which report downlink data allocation information, and/or UL grants, which report uplink data allocation information, based on instructions from the control unit 301. DL assignments and UL grants are both DCI, and follow the DCI format. Also, the downlink data signals are subjected to the coding processing, the modulation processing, and so on, by using coding rates and modulation schemes that are determined based on, for example, channel state information (CSI) reported from each user terminal 20.

The mapping unit 303 maps the downlink signals generated in the transmission signal generation unit 302 to given radio resources based on an instruction from the control unit 301, and outputs these to the transmitting/receiving units 103. The mapping unit 303 can be constituted by a mapper, a mapping circuit, or mapping apparatus that can be described based on general understanding of the technical field to which the present disclosure pertains.

The received signal processing unit 304 performs receiving processes (for example, demapping, demodulation, decoding, and so on) of received signals that are input from the transmitting/receiving units 103. Here, the received signals include, for example, uplink signals transmitted from the user terminals 20 (uplink control signals, uplink data signals, uplink reference signals, and so on). The received signal processing unit 304 can be constituted by a signal processor, a signal processing circuit, or a signal processing apparatus that can be described based on general understanding of the technical field to which the present disclosure pertains.

The received signal processing unit 304 outputs, to the control unit 301, information decoded by the receiving process. For example, when a PUCCH including an HARQ-ACK is received, the received signal processing unit 304 outputs this HARQ-ACK to the control unit 301. Also, the received signal processing unit 304 outputs the received signals and/or the signals after the receiving processes to the measurement unit 305.

The measurement unit 305 conducts measurements with respect to the received signals. The measurement unit 305 can be constituted by a measurer, a measurement circuit, or a measurement apparatus that can be described based on general understanding of the technical field to which the present disclosure pertains.

For example, the measurement unit 305 may perform radio resource management (RRM) measurement, channel state information (CSI) measurement, and the like based on the received signals. The measurement unit 305 may measure the received power (for example, reference signal received power (RSRP)), the received quality (for example, reference signal received quality (RSRQ)), the signal to interference plus noise ratio (SINR), the signal to noise ratio (SNR), the signal strength (for example, received signal strength indicator (RSSI)), the transmission path information (for example, CSI), and so on. The measurement results may be output to the control unit 301.

Note that the transmitting/receiving unit 103 may communicate with an IAB node (for example, another base station 10) by using, for example, NR communication. The control unit 301 may perform control that functions as an IAB node (may be referred to as a radio communication apparatus). Signals, channels, and the like transmitted and received between the base station 10 and the user terminal 20 may be used in NR communication between IAB nodes.

The control unit 301 may control transmission/reception using the transmitting/receiving unit 103 based on an instruction from an upper IAB node (for example, another base station 10). For example, the control unit 301 may control the own base station 10 to function as the user terminal 20 described later, assuming that the upper IAB node is another base station.

The control unit 301 may control the transmission/reception of the lower IAB node (for example, another base station 10). For example, the control unit 301 may control to transmit information (DCI and the like) for controlling transmission/reception of the lower IAB node, assuming that the lower IAB node is the user terminal 20 described later.

Based on a predetermined signal or channel (for example, the IAB donor discovery signal) received from another IAB node (for example, an upper IAB node or a lower IAB node), the control unit 301 may determine whether or not the IAB node has the function of an IAB donor.

The IAB donor discovery signal may be an SS/PBCH block or CSI-RS having characteristics different from those of the SS/PBCH block and CSI-RS for access link.

The IAB donor discovery signal may be a signal or channel that is multiplexed with the SS/PBCH block or CSI-RS that is an IAB node discovery signal by using at least one of TDM, FDM, code division multiplexing (CDM), or SDM.

When the base station 10 has the function of an IAB donor, the control unit 301 may perform control to generate and transmit each of the IAB node discovery signal and the IAB donor discovery signal. When the base station 10 does not have the function of an IAB donor, the control unit 301 may perform control to generate and transmit each of the IAB node discovery signal. When the base station 10 corresponds to the IAB node, the control unit 301 may perform control to receive at least one of the IAB node discovery signal or the IAB donor discovery signal.

### (User terminal)

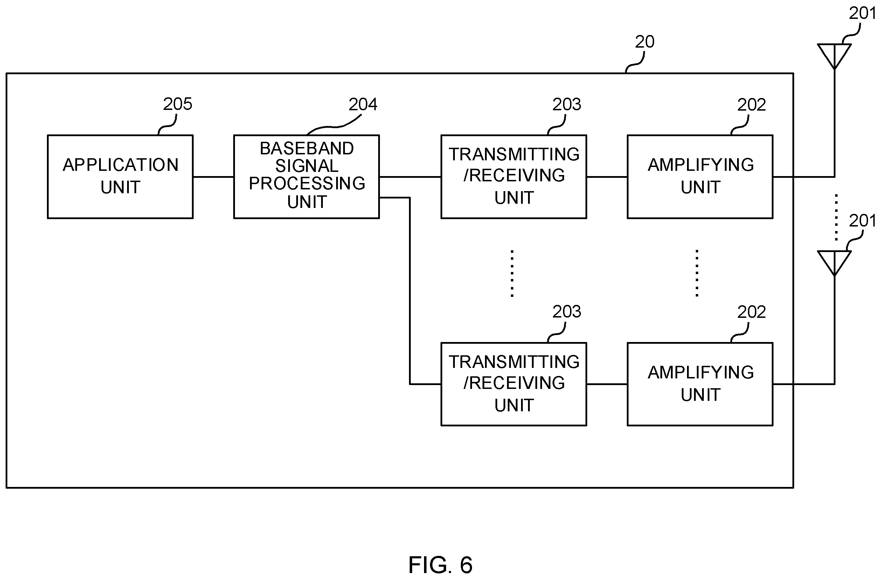

Fig. 6 is a diagram illustrating an example of an overall configuration of a user terminal according to one embodiment. A user terminal 20 has a plurality of transmitting/receiving antennas 201, amplifying units 202, transmitting/receiving units 203, a baseband signal processing unit 204, and an application unit 205. Note that one or more transmitting/receiving antennas 201, amplifying units 202, and transmitting/receiving units 203 may be provided.

Radio frequency signals that are received in the transmitting/receiving antennas 201 are amplified in the amplifying units 202. The transmitting/receiving units 203 receive the downlink signals amplified in the amplifying units 202. The transmitting/receiving unit 203 performs frequency conversion to convert a received signal to a base band signal, and outputs the base band signal to the baseband signal processing unit 204. The transmitting/receiving unit 203 can be constituted by a transmitters/receiver, a transmitting/receiving circuit, or a transmitting/receiving apparatus that can be described based on general understanding of the technical field to which the present disclosure pertains. Note that the transmitting/receiving unit 203 may be constituted as an integrated transmitting/receiving unit or may be constituted by a transmitting unit and a receiving unit.

The baseband signal processing unit 204 performs FFT processing, error correction decoding, retransmission control receiving process, and the like on the input base band signal. Downlink user data is forwarded to the application unit 205. The application unit 205 performs processes related to upper layers above the physical layer and the MAC layer, and so on. Further, in the downlink data, broadcast information may also be transferred to the application unit 205.

Meanwhile, uplink user data is input from the application unit 205 to the baseband signal processing unit 204. The baseband signal processing unit 204 performs a retransmission control transmission process (for example, an HARQ transmission process), channel coding, precoding, a discrete Fourier transform (DFT) process, an IFFT process and so on, and the result is forwarded to the transmitting/receiving unit 203.

The transmitting/receiving unit 203 converts a base band signal output from the baseband signal processing unit 204 into a signal in a radio frequency band, and transmits the signal. The radio frequency signals having been subjected to frequency conversion in the transmitting/receiving units 203 are amplified in the amplifying units 202, and transmitted from the transmitting/receiving antennas 201.

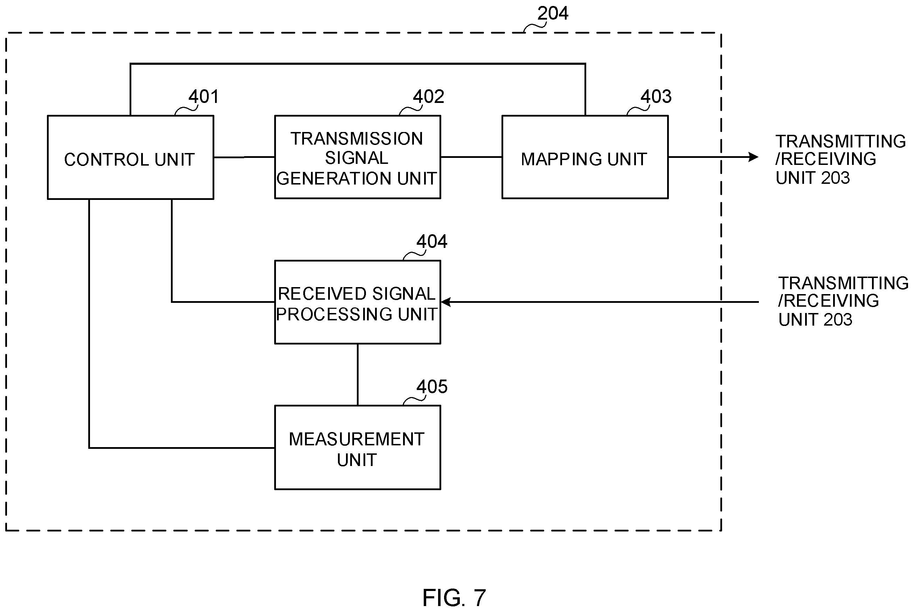

Fig. 7 is a diagram illustrating an example of a functional configuration of the user terminal according to one embodiment. Note that, although this example will primarily illustrate functional blocks that pertain to characteristic parts of the present embodiment, it may be assumed that the user terminal 20 have other functional blocks that are necessary for radio communication as well.

The baseband signal processing unit 204 provided in the user terminal 20 at least has a control unit 401, a transmission signal generation unit 402, a mapping unit 403, a received signal processing unit 404 and a measurement unit 405. Note that these configurations have only to be included in the user terminal 20, and some or all of the configurations need not be included in the baseband signal processing unit 204.

The control unit 401 controls the whole of the user terminal 20. The control unit 401 can be constituted by a controller, a control circuit, or a control apparatus that can be described based on general understanding of the technical field to which the present disclosure pertains.

The control unit 401, for example, controls generation of signals in the transmission signal generation unit 402, the allocation of signals in the mapping unit 403, and so on. Furthermore, the control unit 401 controls the signal receiving process in the received signal processing unit 404, the measurements of signals in the measurement unit 405, and so on.

The control unit 401 acquires the downlink control signals and downlink data signals transmitted from the base station 10, via the received signal processing unit 404. The control unit 401 controls generation of uplink control signals and/or uplink data signals based on the results of deciding whether or not retransmission control is necessary for the downlink control signals and/or downlink data signals, and so on.

The control unit 401 may use digital BF (for example, precoding) by the baseband signal processing unit 204 and/or analog BF (for example, phase rotation) by the transmitting/receiving units 203 to form a Tx beam and/or a reception beam.

Further, when the control unit 401 acquires various information reported from the base station 10 from the received signal processing unit 404, the control unit 401 may update the parameter used for control based on the information.

The transmission signal generation unit 402 generates uplink signals (uplink control signals, uplink data signals, uplink reference signals, and the like) based on instructions from the control unit 401, and outputs these signals to the mapping unit 403. The transmission signal generation unit 402 can be constituted by a signal generator, a signal generation circuit, or a signal generation apparatus that can be described based on general understanding of the technical field to which the present disclosure pertains.

For example, the transmission signal generation unit 402 generates uplink control signals such as delivery acknowledgement information, channel state information (CSI), and so on, based on an instruction from the control unit 401. Also, the transmission signal generation unit 402 generates uplink data signals based on instructions from the control unit 401. For example, when a UL grant is included in a downlink control signal that is reported from the base station 10, the control unit 401 instructs the transmission signal generation unit 402 to generate an uplink data signal.

The mapping unit 403 maps the uplink signals generated in the transmission signal generation unit 402 to radio resources based on an instruction from the control unit 401, and output the result to the transmitting/receiving unit 203. The mapping unit 403 can be constituted by a mapper, a mapping circuit, or a mapping apparatus that can be described based on general understanding of the technical field to which the present disclosure pertains.

The received signal processing unit 404 performs receiving processes (for example, demapping, demodulation, decoding, and so on) of received signals that are input from the transmitting/receiving units 203. Here, the received signals include, for example, downlink signals (downlink control signals, downlink data signals, downlink reference signals, and so on) that are transmitted from the base station 10. The received signal processing unit 404 can be constituted by a signal processor, a signal processing circuit, or a signal processing apparatus that can be described based on general understanding of the technical field to which the present disclosure pertains. Also, the received signal processing unit 404 can constitute the receiving unit according to the present disclosure.

The received signal processing unit 404 outputs the decoded information that is acquired through the receiving process to the control unit 401. The received signal processing unit 404 outputs, for example, broadcast information, system information, RRC signaling, DCI, and so on, to the control unit 401. Also, the received signal processing unit 404 outputs the received signals and/or the signals after the receiving processes to the measurement unit 405.

The measurement unit 405 conducts measurements with respect to the received signals. The measurement unit 405 can be constituted by a measurer, a measurement circuit or measurement apparatus that can be described based on general understanding of the technical field to which the present disclosure pertains.

For example, the measurement unit 405 may perform RRM measurements, CSI measurements, and so on based on the received signals. The measurement unit 405 may measure the received power (for example, RSRP), the received quality (for example, RSRQ, SINR, SNR, or the like), the signal strength (for example, RSSI), transmission path information (for example, CSI), and so on. The measurement results may be output to the control unit 401.

### (Hardware configuration)

Note that the block diagrams that have been used to describe the above embodiments illustrate blocks in functional units. These functional blocks (components) may be implemented in arbitrary combinations of at least one of hardware or software. Also, the method for implementing each functional block is not particularly limited. That is, each functional block may be achieved by a single apparatus physically or logically aggregated, or may be achieved by directly or indirectly connecting two or more physically or logically separate apparatuses (using wires, radio, or the like, for example) and using these plural apparatuses. The functional block may be implemented by combining the one device or the plurality of devices with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, and assigning. For example, a functional block (configuration unit) that causes transmission to function may be referred to as a transmitting unit, a transmitter, or the like. In any case, as described above, the implementation method is not particularly limited.

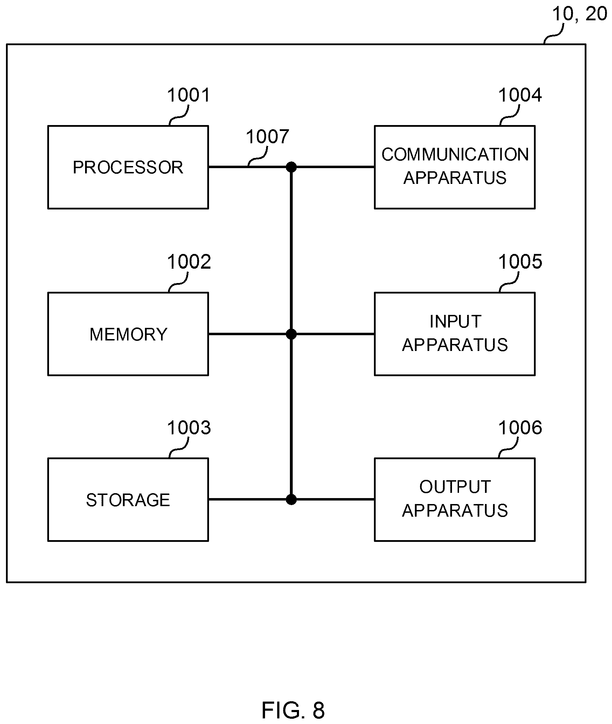

For example, the base station, the user terminal, and so on according to one embodiment of the present disclosure may function as a computer that executes the processing of the radio communication method of the present disclosure. Fig. 8 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the terms such as an apparatus, a circuit, a device, a section, and a unit can be replaced with each other. The hardware configuration of the base station 10 and the user terminal 20 may be configured to include one or more of each apparatus illustrated in the drawings, or may be configured not to include some apparatuses.

For example, although only one processor 1001 is illustrated, a plurality of processors may be provided. Furthermore, processes may be implemented with one processor, or processes may be implemented in sequence, or in different manners, on two or more processors. Note that the processor 1001 may be implemented with one or more chips.

Each function of the base station 10 and the user terminal 20 is implemented by, for example, reading given software (program) on hardware such as the processor 1001 and the memory 1002, and by controlling the operation in the processor 1001, the communication in the communication apparatus 1004, and at least one of the reading or writing of data in the memory 1002 and the storage 1003.

The processor 1001 may control the whole computer by, for example, running an operating system. The processor 1001 may be configured with a central processing unit (CPU), which includes interfaces with peripheral equipment, a control apparatus, a computing apparatus, a register, and so on. For example, the above-described baseband signal processing unit 104 (204), call processing unit 105, and so on may be implemented by the processor 1001.

Furthermore, the processor 1001 reads programs (program codes), software modules, or data, from at least one of the storage 1003 or the communication apparatus 1004, into the memory 1002, and executes various processing according to these. As for the programs, programs to allow computers to execute at least part of the operations of the above-described embodiments may be used. For example, the control unit 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of read only memory (ROM), erasable programmable ROM (EPROM), electrically EPROM (EEPROM), random access memory (RAM) and/or other appropriate storage media. The memory 1002 may be referred to as a "register", a "cache", a "main memory (primary storage apparatus)" and so on. The memory 1002 can store a program (program code), a software module, and the like, which are executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (for example, a compact disc (compact disc ROM (CD-ROM) and so on), a digital versatile disc, or a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus".

The communication apparatus 1004 is hardware (transmitting/receiving device) for performing inter-computer communication via at least one of a wired network or a radio network, and for example, is referred to as "network device", "network controller", "network card", "communication module", and the like. The communication apparatus 1004 may be configured to include a high frequency switch, a duplexer, a filter, a frequency synthesizer and so on in order to realize, for example, at least one of frequency division duplex (FDD) or time division duplex (TDD). For example, the above-described transmitting/receiving antennas 101 (201), amplifying units 102 (202), transmitting/receiving units 103 (203), communication path interface 106 and so on may be implemented by the communication apparatus 1004. The transmitting/receiving unit 103 (203) may be implemented in a physically or logically separated manner by the transmitting unit 103a (203a) and the receiving unit 103b (203b).

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated configuration (for example, a touch panel).

Furthermore, these apparatuses, including the processor 1001, the memory 1002, and so on are connected by the bus 1007 for information communication. The bus 1007 may include a single bus, or may include different buses for each pair of apparatuses.

Also, the base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Modified examples)

Note that the terminology used in the present disclosure and the terminology that is needed to understand the present disclosure may be replaced with other terms that convey the same or similar meanings. For example, at least one of channels or symbols may be replaced by signals (signaling). Also, "signals" may be replaced with "messages". A reference signal may be abbreviated as an "RS", and may be referred to as a "pilot", a "pilot signal" and so on, depending on which standard applies. Furthermore, a "component carrier (CC)" may be referred to as a "cell", a "frequency carrier", a "carrier frequency" and so on.

A radio frame may be composed of one or more periods (frames) in the time domain. Each of one or more periods (frames) constituting a radio frame may be referred to as a "subframe". Furthermore, a subframe may include one or multiple slots in the time domain. A subframe may be a fixed time duration (for example, 1 ms) that is not dependent on numerology.

Here, the numerology may be a communication parameter used for at least one of transmission or reception of a certain signal or channel. For example, the numerology may indicate at least one of SubCarrier Spacing (SCS), a bandwidth, a symbol length, a cyclic prefix length, a transmission time interval (TTI), the number of symbols per TTI, a radio frame configuration, specific filtering processing to be performed by a transceiver in the frequency domain, specific windowing processing to be performed by a transceiver in the time domain and so on.

A slot may be composed of one or more symbols in the time domain (OFDM (Orthogonal Frequency Division Multiplexing) symbols, SC-FDMA (Single Carrier Frequency Division Multiple Access) symbols, and so on). Also, a slot may be a time unit based on numerology.

A slot may include a plurality of mini slots. Each mini slot may include one or more symbols in the time domain. Also, a mini slot may be referred to as a "subslot". Each mini slot may include fewer symbols than a slot. A PDSCH (or PUSCH) transmitted in a time unit larger than a mini slot may be referred to as PDSCH (PUSCH) mapping type A. A PDSCH (or PUSCH) transmitted using a mini slot may be referred to as "PDSCH (PUSCH) mapping type B".

Each of the radio frame, the subframe, the slot, the mini slot, and the symbol represents a time unit at the time of transmitting a signal. A radio frame, a subframe, a slot, a mini slot and a symbol may be each called by other applicable names. Note that time units such as a frame, a subframe, a slot, a mini slot, and a symbol in the present disclosure may be replaced with each other.

For example, one subframe may be referred to as a "transmission time interval (TTI)", or a plurality of consecutive subframes may be referred to as a "TTI", or one slot or one mini slot may be referred to as a "TTI". That is, at least one of a subframe and a TTI may be a subframe (1 ms) in existing LTE, may be a shorter period than 1 ms (for example, one to thirteen symbols), or may be a longer period of time than 1 ms. Note that the unit to represent the TTI may be referred to as a "slot", a "mini slot" and so on, instead of a "subframe".

Here, a TTI refers to the minimum time unit of scheduling in radio communication, for example. For example, in LTE systems, the base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks, codewords and so on, or may be the unit of processing in scheduling, link adaptation and so on. Note that when TTI is given, a time interval (for example, the number of symbols) in which the transport blocks, the code blocks, the codewords, and the like are actually mapped may be shorter than TTI.

Note that, when one slot or one mini slot is referred to as a "TTI", one or more TTIs (that is, one or multiple slots or one or more mini slots) may be the minimum time unit of scheduling. Also, the number of slots (the number of mini slots) to constitute this minimum time unit of scheduling may be controlled.

TTI having a time length of 1 ms may be referred to as usual TTI (TTI in LTE Rel. 8 to 12), normal TTI, long TTI, a usual subframe, a normal subframe, a long subframe, a slot, or the like. A TTI that is shorter than a usual TTI may be referred to as "shortened TTI", "short TTI", "partial TTI" (or "fractional TTI"), "shortened subframe", "short subframe", "mini slot", "sub-slot", "slot", or the like.

Note that a long TTI (for example, a usual TTI, a subframe, or the like) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. The number of subcarriers included in the RB may be the same regardless of the numerology, and may be 12, for example. The number of subcarriers included in the RB may be determined based on numerology.

Also, an RB may include one or more symbols in the time domain, and may be one slot, one mini slot, one subframe or one TTI in length. One TTI, one subframe, and the like each may be composed of one or more resource blocks.

Note that one or more RBs may be referred to as a "physical resource block (PRB (Physical RB))", a "subcarrier group (SCG)", a "resource element group (REG)", a "PRB pair", an "RB pair" and so on.

Furthermore, a resource block may be composed of one or more resource elements (REs). For example, one RE may be a radio resource field of one subcarrier and one symbol.

The bandwidth part (BWP) (which may be referred to as partial bandwidth or the like) may represent a subset of consecutive common RB (common resource blocks) for a certain numerology in a certain carrier. Here, the common RB may be specified by the index of the RB based on a common reference point of the carrier. The PRB may be defined in a certain BWP and numbered within that BWP.

The BWP may include a BWP for UL (UL BWP) and a BWP for DL (DL BWP). For the UE, one or more BWPs may be configured within one carrier.

At least one of the configured BWPs may be active, and the UE need not expect to transmit or receive a given signal/channel outside the active BWP. Note that "cell", "carrier", and the like in the present disclosure may be replaced with "BWP".

Note that the configurations of radio frames, subframes, slots, mini slots, symbols, and the like described above are merely examples. For example, configurations pertaining to the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol duration, the length of cyclic prefixes (CPs), and the like can be variously changed.

Also, the information, the parameters, and the like described in the present disclosure may be represented in absolute values or in relative values with respect to given values, or may be represented using other applicable information. For example, a radio resource may be specified by a given index.

The names used for parameters and so on in the present disclosure are in no respect limiting. In addition, an equation and so on using these parameters may differ from those explicitly disclosed in the present disclosure. Since various channels (physical uplink control channel (PUCCH), physical downlink control channel (PDCCH), and the like) and information elements can be identified by any suitable names, the various names assigned to these individual channels and information elements are in no respect limiting.

The information, signals, and the like described in the present disclosure may be represented by using a variety of different technologies. For example, data, instructions, commands, information, signals, bits, symbols, chips, and the like that may be referenced throughout the above description, may be represented by voltages, currents, electromagnetic waves, magnetic fields or particles, optical fields or photons, or any combination of these.

Further, information, signals, and the like can be output in at least one of a direction from upper layers to lower layers and a direction from lower layers to upper layers. Information, signals, and the like may be input and output via a plurality of network nodes.

The information, signals, and the like that have been input and/or output may be stored in a specific location (for example, in a memory), or may be managed in a control table. The information, signals and so on to be input and/or output can be overwritten, updated, or appended. The information, signals and so on that are output may be deleted. The information, signals, and the like that are input, may be transmitted to other apparatuses.

The reporting of information is by no means limited to the aspects/embodiments described in the present disclosure, and may be performed using other methods. For example, the reporting of information may be implemented by physical layer signaling (for example, downlink control information (DCI), uplink control information (UCI)), higher layer signaling (for example, radio resource control (RRC) signaling, broadcast information (master information block (MIB), system information block (SIB), and the like), and medium access control (MAC) signaling), other signals or combinations of these.

Note that physical layer signaling may be referred to as "L1/L2 (Layer 1/Layer 2) control information (L1/L2 control signals)", "L1 control information (L1 control signal)" and so on. Also, RRC signaling may be referred to as "RRC messages", and can be, for example, an RRC connection setup message, RRC connection reconfiguration message, and so on. Also, MAC signaling may be reported using, for example, MAC control elements (MAC CEs (Control Elements)).

Further, reporting of given information (for example, reporting of information to the effect that "X holds") does not necessarily have to be sent explicitly, and may be sent implicitly (for example, by not reporting this given information, or by reporting another piece of information).

Decisions may be made in values represented by one bit (0 or 1), may be made in Boolean values that represent true or false, or may be made by comparing numerical values (for example, comparison with a given value).

Regardless of whether referred to as "software", "firmware", "middleware", "microcode" or "hardware description language", or called by other names, software should be interpreted broadly to mean instructions, instruction sets, code, code segments, program codes, programs, subprograms, software modules, applications, software applications, software packages, routines, subroutines, objects, executable files, execution threads, procedures, functions and so on.

Also, software, instructions, information and so on may be transmitted and received via communication media. For example, when software is transmitted from a website, a server or other remote sources by using at least one of wired technologies (coaxial cables, optical fiber cables, twisted-pair cables, digital subscriber lines (DSLs), and the like) and radio technologies (infrared radiation, microwaves, and the like), at least one of these wired technologies and radio technologies are also included in the definition of communication media.

The terms "system" and "network" as used in the present disclosure are used interchangeably.

In the present disclosure, terms such as "precoding", "precoder", "weight (precoding weight)", "quasi-Co-Location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be compatibly used.

In the present disclosure, the terms such as "base station (BS)", "radio base station", "fixed station", "NodeB", "eNodeB (eNB)", "gNodeB (gNB)", "node", "integrated access backhaul (IAB) node", "access point", "transmission point (TP)", "reception point (RP)", "transmission/reception point (TRP)", "panel", "cell", "sector", "cell group", "carrier", and "component carrier" may be used interchangeably. The base station may be called a term such as a macro cell, a small cell, a femto cell, a pico cell, and the like.

A base station can accommodate one or more (for example, three) cells. When a base station accommodates a plurality of cells, the entire coverage area of the base station can be partitioned into a plurality of smaller areas, and each smaller area can provide communication services through base station subsystems (for example, indoor small base stations (remote radio heads (RRHs))). The term "cell" or "sector" refers to all or part of the coverage area of at least one of a base station or a base station subsystem that provides communication services within this coverage.

In the present disclosure, the terms "mobile station (MS)", "user terminal", "user equipment (UE)", "terminal", and the like may be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of a base station or a mobile station may be referred to as a transmitting apparatus, a receiving apparatus, a radio communication apparatus, or the like. Note that at least one of the base station and mobile station may be a device mounted on a moving body, a moving body itself and the like. The moving object may be a transportation (for example, a car, an airplane and so on), an unmanned moving object (for example, a drone, an autonomous car and so on), or a (manned or unmanned) robot. Note that at least one of the base station or the mobile station also includes a device that does not necessarily move during a communication operation. For example, at least one of the base station or the mobile station may be an IoT (Internet of Things) device such as a sensor.

Further, the base stations in the present disclosure may be replaced with the user terminal. For example, each aspect/embodiment of the present disclosure may be applied to a configuration in which communication between the base station and the user terminal is replaced by communication among a plurality of user terminal (which may be referred to as, for example, D2D (Device-to-Device), V2X (Vehicle-to-Everything), and so on). In this case, the user terminal 20 may have the functions of the base station 10 described above. In addition, the wording such as "up" and "down" may be replaced with the wording corresponding to the terminal-to-terminal communication (for example, "side"). For example, an uplink channel, a downlink channel, and so on may be replaced with a side channel.

Likewise, the user terminal in the present disclosure may be replaced with the base station. In this case, the base station 10 may have the functions of the user terminal 20 described above.

In the present disclosure, an operation performed by a base station may be performed by an upper node thereof in some cases. In a network composed of one or more network nodes with base stations, it is clear that various operations that are performed so as to communicate with terminals can be performed by base stations, one or more network nodes (for example, MMEs (Mobility Management Entities), S-GWs (Serving-Gateways) and so on may be possible, but these are not limiting) other than base stations, or combinations of these.

The aspects/embodiments described in the present disclosure may be used individually or in combinations, which may be switched depending on the mode of implementation. Further, the order of a processing procedure, a sequence, a flowchart, and so on of each aspect/embodiment described in the present disclosure may be changed as long as there is no inconsistencies. For example, regarding the methods described in the present disclosure, elements of various steps are presented using an illustrative order, and are not limited to the presented particular order.

Each aspect/embodiment described in the present disclosure may be applied to a system using long term evolution (LTE), LTE-Advanced (LTE-A), LTE-Beyond (LTE-B), SUPER 3G, IMT-Advanced, 4th generation mobile communication system (4G), 5th generation mobile communication system (5G), future radio access (FRA), new radio access technology (New-RAT), New Radio(NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate radio communication methods and a next generation system expanded based on these methods, and the like. Further, a plurality of systems may be combined and applied (for example, a combination of LTE or LTE-A and 5G, or the like).

The phrase "based on" as used in the present disclosure does not mean "based only on", unless otherwise specified. In other words, the phrase "based on" means both "based only on" and "based at least on".

Reference to elements with designations such as "first", "second" and so on as used in the present disclosure does not generally limit the number/quantity or order of these elements. These designations are used in the present disclosure only for convenience, as a method for distinguishing between two or more elements. In this way, reference to the first and second elements does not imply that only two elements may be employed, or that the first element must precede the second element in some way.

The term "determining" as used in the present disclosure may encompass a wide variety of operations. For example, "determining" may be regarded as judging, calculating, computing, processing, deriving, investigating, looking up, search, inquiry (for example, looking up in a table, database, or another data structure), ascertaining, and the like.

Furthermore, "determine" as used herein may be interpreted to mean making a determinations related to receiving (for example, receiving information), transmitting (for example, transmitting information), inputting, outputting, accessing (for example, accessing data in a memory), and the like.

In addition, "determine" as used herein may be interpreted to mean making determinations related to resolving, selecting, choosing, establishing, comparing, and the like. In other words, "determine" as used herein may be interpreted to mean making determinations related to some operation.

In addition, "determining" as used herein may be replaced with "assuming", "expecting", "considering", and the like.

As used in the present disclosure, the terms "connected" and "coupled", or any variation of these terms, mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as some non-limiting and non-inclusive examples, by using electromagnetic energy having wavelengths in a radio frequency domain, a microwave domain, and an optical (both visible and invisible) domain, or the like.

In the present disclosure, the phrase "A and B are different" may mean "A and B are different from each other". Note that the term may mean that "each of A and B is different from C". The terms such as "leave", "coupled", and the like may be interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, for example, where translations add articles, such as a, an, and the in English, the present disclosure may include that the noun that follows these articles is in the plural.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the scope defined by the recitations of claims. Consequently, the description of the present disclosure is provided only for the purpose of exemplification and explanation, and should by no means be construed to limit the invention according to the present disclosure in any way.

## Claims

1. An integrated access backhaul, IAB, node (10, 11, 12) configured to use a radio communication for a backhaul link and an access link, wherein the IAB node comprises:
a receiving unit (103) configured to receive a predetermined signal or channel from another IAB node; and
a control unit (301) configured to determine, based on the predetermined signal or channel, whether or not the another IAB node has a function of an IAB donor,
wherein the predetermined signal or channel is a synchronization signal/physical broadcast channel, SS/PBCH block that has a time domain size and a periodicity different from a time domain size and a periodicity of an SS/PBCH block for an access link, and
wherein, when the another IAB node has a function of an IAB donor, the IAB node (10, 11, 12) is configured to perform control to execute processing for the another IAB node, said control being connection processing or a random access procedure.

2. The IAB node (10, 11, 12) according to claim 1, wherein the predetermined signal or channel is multiplexed with an IAB node discovery signal by using at least one of time division multiplexing, TDM, frequency division multiplexing, FDM, or space division multiplexing, SDM.

3. A radio communication method for an integrated access backhaul, IAB, node (10, 11, 12) using a radio communication for a backhaul link and an access link, wherein the radio communication method comprises:
a step of receiving a predetermined signal or channel from another IAB node; and
a step of determining, based on the predetermined signal or channel, whether or not the another IAB node has a function of an IAB donor,
wherein the predetermined signal or channel is a synchronization signal/physical broadcast channel, SS/PBCH block, that has a time domain size and a periodicity different from a time domain size and a periodicity of an SS/PBCH block for an access link, and
wherein, when the another IAB node has a function of an IAB donor, the IAB node (10, 11, 12) performs control to execute processing for the another IAB node, said control being connection processing or a random access procedure.

4. A system comprising a first integrated access backhaul, IAB, node (10, 11, 12) and a second IAB node (10, 11, 12) using a radio communication for a backhaul link and an access link, wherein
the first IAB node (10, 11, 12) comprises:
a transmitting section (103) configured to transmit, to the second IAB node (10, 11, 12), a predetermined signal or channel, and
the second IAB node (10, 11, 12) comprises:
a receiving section (103) configured to receive, from the first IAB node (10, 11, 12), the predetermined signal or channel; and
a control section (301) configured to determine, based on the predetermined signal or channel, whether or not the first IAB node (10, 11, 12) has a function of an IAB donor,
wherein the predetermined signal or channel is a synchronization signal/physical broadcast channel, SS/PBCH block, that has a time domain size and a periodicity different from a time domain size and a periodicity of an SS/PBCH block for an access link, and
wherein, when the first IAB node (10, 11, 12) has a function of an IAB donor, the second IAB node (10, 11, 12) is configured to perform control to execute processing for the first IAB node (10, 11, 12), said control being connection processing or a random access procedure.

## Patentansprüche

1. Integrierter Zugangs- und Backhaul-, IAB-, Knoten (10, 11, 12), der so konfiguriert ist, dass er eine Funkkommunikation für eine Backhaul-Verbindung und eine Zugangsverbindung verwendet, wobei der IAB-Knoten Folgendes umfasst:
eine Empfangseinheit (103), die so konfiguriert ist, dass sie ein vorbestimmtes Signal oder einen vorbestimmten Kanal von einem anderen IAB-Knoten empfängt; und
eine Steuereinheit (301), die so konfiguriert ist, dass sie basierend auf dem vorbestimmten Signal oder Kanal bestimmt, ob der andere IAB-Knoten eine Funktion eines IAB-Donors aufweist oder nicht,
wobei das/der vorbestimmte Signal oder Kanal ein Synchronisationssignal/physischer Broadcast-Kanal-, SS/PBCH-Block ist, der eine Zeitbereichsgröße und eine Periodizität aufweist, die sich von einer Zeitbereichsgröße und einer Periodizität eines SS/PBCH-Blocks für eine Zugangsverbindung unterscheiden, und
wobei, wenn der andere IAB-Knoten eine Funktion eines IAB-Donors aufweist, der IAB-Knoten (10, 11, 12) so konfiguriert ist, dass er Steuerung durchführt, um Verarbeitung für den anderen IAB-Knoten auszuführen, wobei die Steuerung Verbindungsverarbeitung oder ein Direktzugriffsverfahren ist.

2. IAB-Knoten (10, 11, 12) nach Anspruch 1, wobei das/der vorbestimmte Signal oder Kanal mit einem IAB-Knoten-Discovery-Signal durch Verwenden von mindestens einem von Zeitmultiplexverfahren, TDM, Frequenzmultiplexverfahren, FDM, oder Raummultiplexverfahren, SDM, gemultiplext wird.

3. Funkkommunikationsverfahren für einen integrierten Zugangs- und Backhaul-, IAB-, Knoten (10, 11, 12) unter Verwendung einer Funkkommunikation für eine Backhaul-Verbindung und eine Zugangsverbindung, wobei das Funkkommunikationsverfahren Folgendes umfasst:
einen Schritt des Empfangens eines vorbestimmten Signals oder Kanals von einem anderen IAB-Knoten; und
einen Schritt des Bestimmens, basierend auf dem vorbestimmten Signal oder Kanal, ob der andere IAB-Knoten eine Funktion eines IAB-Donors aufweist oder nicht,
wobei das/der vorbestimmte Signal oder Kanal ein Synchronisationssignal/physischer Broadcast-Kanal-, SS/PBCH-Block ist, der eine Zeitbereichsgröße und eine Periodizität aufweist, die sich von einer Zeitbereichsgröße und einer Periodizität eines SS/PBCH-Blocks für eine Zugangsverbindung unterscheiden, und
wobei, wenn der andere IAB-Knoten eine Funktion eines IAB-Donors aufweist, der IAB-Knoten (10, 11, 12) Steuerung durchführt, um Verarbeitung für den anderen IAB-Knoten auszuführen, wobei die Steuerung Verbindungsverarbeitung oder ein Direktzugriffsverfahren ist.

4. System umfassend einen ersten integrierten Zugangs- und Backhaul-, IAB-, Knoten (10, 11, 12) und einen zweiten IAB-Knoten (10, 11, 12) unter Verwendung von Funkkommunikation für eine Backhaul-Verbindung und eine Zugangsverbindung, wobei
der erste IAB-Knoten (10, 11, 12) Folgendes umfasst:
einen Übertragungsabschnitt (103), der so konfiguriert ist, dass ein vorbestimmtes Signal oder einen vorbestimmten Kanal an den zweiten IAB-Knoten (10, 11, 12) überträgt, und
der zweite IAB-Knoten (10, 11, 12) Folgendes umfasst:
einen Empfangsabschnitt (103), der so konfiguriert ist, dass er das vorbestimmte Signal oder den vorbestimmten Kanal von dem ersten IAB-Knoten (10, 11, 12) empfängt; und
einen Steuerabschnitt (301), der so konfiguriert ist, dass er basierend auf dem vorbestimmten Signal oder Kanal bestimmt, ob der andere IAB-Knoten (10, 11, 12) eine Funktion eines IAB-Donors aufweist oder nicht,
wobei das vorbestimmte Signal oder der vorbestimmte Kanal ein Synchronisationssignal/physischer Broadcast-Kanal-, SS/PBCH-Block ist, der eine Zeitbereichsgröße und eine Periodizität aufweist, die sich von einer Zeitbereichsgröße und einer Periodizität eines SS/PBCH-Blocks für eine Zugangsverbindung unterscheiden, und
wobei, wenn der erste IAB-Knoten eine Funktion eines IAB-Donors (10, 11, 12) aufweist, der zweite IAB-Knoten (10, 11, 12) so konfiguriert ist, dass er Steuerung durchführt, um Verarbeitung für den ersten IAB-Knoten (10, 11, 12) auszuführen, wobei die Steuerung Verbindungsverarbeitung oder ein Direktzugriffsverfahren ist.

## Revendications

1. Nœud (10, 11, 12) de réseau de collecte à accès intégré, IAB, configuré pour utiliser une communication radio pour une liaison de réseau de collecte et une liaison d'accès, dans lequel le nœud IAB comprend :
une unité de réception (103) configurée pour recevoir un signal ou canal prédéterminé en provenance d'un autre nœud IAB ; et
une unité de commande (301) configurée pour déterminer, sur la base du signal ou canal prédéterminé, si oui ou non l'autre nœud IAB a une fonction de donneur IAB,
dans lequel le signal ou canal prédéterminé est un bloc de signal de synchronisation/canal de diffusion générale physique, bloc SS/PBCH, qui présente une taille de domaine temporel et une périodicité différente d'une taille de domaine temporel et d'une périodicité d'un bloc SS/PBCH pour une liaison d'accès, et
dans lequel, lorsque l'autre nœud IAB a une fonction de donneur IAB, le nœud IAB (10, 11, 12) est configuré pour réaliser la commande d'exécuter le traitement pour l'autre nœud IAB, ladite commande étant le traitement de connexion ou une procédure d'accès aléatoire.

2. Nœud IAB (10, 11, 12) selon la revendication 1, dans lequel le signal ou canal prédéterminé est multiplexé avec un signal de découverte de nœud IAB en utilisant au moins un multiplexage parmi le multiplexage par répartition dans le temps, TDM, le multiplexage par répartition en fréquence, FDM , ou le multiplexage par répartition spatiale, SDM.

3. Procédé de communication radio pour un nœud (10, 11, 12) de réseau de collecte à accès intégré, IAB, utilisant une communication radio pour une liaison de réseau de collecte et une liaison d'accès, dans lequel le procédé de communication radio comprend :
une étape destinée à recevoir un signal ou canal prédéterminé en provenance d'un autre nœud IAB ; et
une étape destinée à déterminer, sur la base du signal ou canal prédéterminé, si oui ou non l'autre nœud IAB a une fonction de donneur IAB,
dans lequel le signal ou canal prédéterminé est un bloc de signal de synchronisation/canal de diffusion générale physique, bloc SS/PBCH, qui présente une taille de domaine temporel et une périodicité différente d'une taille de domaine temporel et d'une périodicité d'un bloc SS/PBCH pour une liaison d'accès, et
dans lequel, lorsque l'autre nœud IAB a une fonction de donneur IAB, le nœud IAB (10, 11, 12) réalise la commande d'exécuter le traitement pour l'autre nœud IAB, ladite commande étant le traitement de connexion ou une procédure d'accès aléatoire.

4. Système comprenant un premier nœud (10, 11, 12) de réseau de collecte à accès intégré, IAB, et un second nœud IAB (10, 11, 12) en utilisant une communication radio pour une liaison de réseau de collecte et une liaison d'accès, dans lequel
le premier nœud IAB (10, 11, 12) comprend :
une section de transmission (103) configurée pour transmettre, vers le second nœud IAB (10, 11, 12), un signal ou canal prédéterminé, et
le second nœud IAB (10, 11, 12) comprend :
une section de réception (103) configurée pour recevoir, en provenance du premier nœud IAB (10, 11, 12), le signal ou canal prédéterminé ; et
une section de commande (301) configurée pour déterminer, sur la base du signal ou canal prédéterminé, si oui ou non le premier nœud IAB (10, 11, 12) a une fonction de donneur IAB,
dans lequel le signal ou canal prédéterminé est un bloc de signal de synchronisation/canal de diffusion générale physique, bloc SS/PBCH, qui présente une taille de domaine temporel et une périodicité différente d'une taille de domaine temporel et d'une périodicité d'un bloc SS/PBCH pour une liaison d'accès, et
dans lequel, lorsque le premier nœud IAB (10, 11, 12) a une fonction de donneur IAB, le second nœud IAB (10, 11, 12) est configuré pour réaliser la commande d'exécuter le traitement pour le premier nœud IAB (10, 11, 12), ladite commande étant le traitement de connexion ou une procédure d'accès aléatoire.
